# EUROPÄISCHE PATENTSCHRIFT

(11) **EP 4 436 771 B1**
(45) Veröffentlichungstag und Bekanntmachung des Hinweises auf die Patenterteilung: **10.06.2026**
(21) Anmeldenummer: 22817395.1
(22) Anmeldetag: 24.11.2022
(51) Int. Cl.: B29C 71/00, B29C 64/35, B33Y 40/20, B08B 3/10, B08B 3/14

(54) **VERFAHREN ZUR REINIGUNG VON MITTELS EINES LITHOGRAPHISCHEN GENERATIVEN FERTIGUNGSVERFAHREN HERGESTELLTEN BAUTEILEN**
METHOD FOR CLEANING COMPONENTS PRODUCED BY LITHOGRAPHIC ADDITIVE MANUFACTURING
PROCÉDÉ DE NETTOYAGE DE COMPOSANTS PRODUITS PAR FABRICATION ADDITIVE LITHOGRAPHIQUE

(30) Priorität: 26.11.2021 AT 1872021
(43) Veröffentlichungstag der Anmeldung: 02.10.2024
(60) Teilanmeldung: 25165211.1
(73) Patentinhaber: Cubicure GmbH, 1230 Wien (AT)
(72) Erfinder: PFAFFINGER, Markus, 3451 Michelhausen (AT); KURY, Markus, 1060 Wien (AT)
(74) Vertreter: SONN Patentanwälte GmbH & Co KG
(86) Internationale Anmeldenummer: PCT/IB2022/061376
(87) Internationale Veröffentlichungsnummer: WO 2023/095047

(56) Entgegenhaltungen:
- WO-A1-2020/099096
- DE-A1- 10 238 142
- JP-A- H01 258 702
- US-A- 5 248 456

## Beschreibung

Die Erfindung betrifft ein Verfahren gemäß Anspruch 1, zur Reinigung von Bauteilen, an denen unreagiertes Harz anhaftet, insbesondere von mittels eines lithographischen generativen Fertigungsverfahrens hergestellten Bauteilen, umfassend
- einen Reinigungsschritt, bei dem die Bauteile in eine Reinigungskammer eingebracht werden, die Bauteile in der Reinigungskammer mit einem Reinigungsmedium kontaktiert werden, wodurch Harz von den Bauteilen abgelöst wird, und das mit dem abgelösten Harz beladene Reinigungsmedium aus der Reinigungskammer ausgebracht wird, und
- einen Regenerierungsschritt, bei dem das beladene Reinigungsmedium einer Destillationseinheit zugeführt wird, in welcher das kontaminierte Reinigungsmedium durch destillative Abtrennung des Harzes regeneriert wird.

Die Veröffentlichung JP H01 258702 A offenbart ein Verfahrne zur Reinigung von Bauteilen, an denen unreagiertes Harz anhaftet, mit Bezug zum Gegenstand der vorliegenden Erfindung.

Die Erfindung betrifft das Gebiet der industriellen Reinigung additiv gefertigter dreidimensionaler Strukturen, die mittels eines strahlungshärtenden Verfahrens hergestellt wurden. Üblicherweise werden in strahlungshärtenden additiven Fertigungsverfahren bei Prozesstemperatur flüssige Reaktivharze lokal und hoch aufgelöst Strahlung ausgesetzt und dadurch ausgehärtet. Die erste Schicht wird auf einer Bauplattform oder einem Substrat ausgehärtet, an welchem die in weiterer Folge schichtweise ausgehärteten dreidimensionalen Formkörper anhaften können. Der schichtweise Aufbau der Formkörper kann in einem bottom-up oder top-down Prozess erfolgen. Beispiele für strahlungshärtende additive Fertigungsverfahren sind Stereolithographie, Digital Light Processing (DLP), Zwei-Photonen-Lithographie, Inkjet sowie diverse Verfahrenskombinationen. Ein weiteres Verfahren ist die von der Anmelderin entwickelte Hot Lithography Technologie. Hier werden bei Raumtemperatur hochviskose Harze selektiv aufgeheizt und dadurch die Viskosität soweit abgesenkt bis die Harze prozessierbar werden.

Nach erfolgreichem Druck der 3D Geometrien sind diese immer noch mit Reaktivharz kontaminiert. Die Entfernung des unerwünschten Restharzes findet üblicherweise in Tauchbädern mit flüchtigen und teilweise leicht entzündlichen organischen Lösungsmitteln (z.B. Isopropanol) statt. Das Lösungsmittel löst das an den 3D gedruckten Strukturen anhaftende Restharz auf und entfernt es somit vom vernetzten Photopolymerbauteil. Die Reinigungsprozesse finden üblicherweise in einem offenen Prozess statt, der den Anwender Lösungsmitteldämpfen und Lösungsmittelrückständen auf den gereinigten Bauteiloberflächen aussetzt. In vielen Fällen lässt die Reinigungsleistung des Lösungsmittels schon nach geringer Harzbeladung stark nach und kann Bauteile nicht mehr vollständig von Harzresten befreien. Durch die graduelle Abnahme der Reinigungsleistung des Lösungsmittels können keine konstanten, reproduzierbaren Reinigungsergebnisse erreicht werden. Daher wird das Lösungsmittel oft schon nach kurzer Zeit entsorgt und es fallen enorme Mengen an Lösungsmittelabfällen an.

Im Gegensatz zur Reinigung von 3D Formkörpern, die durch nicht harzbasierte generative Produktionstechnologien hergestellt werden (z.B. FDM oder Pulvertechnologien SLS oder SLM), ist das gelöste strahlungshärtenden Harz noch immer reaktiv und in der Lage thermisch und strahlungsinduziert auszuhärten. Daher erweist sich besonders die Regenerierung des Lösungsmittels als schwierig. Weiters führt die oft manuelle Reinigung zu ungleichmäßigen Reinigungsergebnissen, die die Bauteilqualität, aber auch mechanische Eigenschaften des gedruckten Materials stark beeinflussen können. Spezielle Geometrien, wie zum Beispiel lange dünne verharzte Kanäle, Sacklöcher und/oder Hinterschneidungen können mit herkömmlichen Reinigungsverfahren teilweise gar nicht zufriedenstellend gereinigt werden. Besonders schwierig gestaltet sich die Entfernung von viskosen und hoch viskosen Harzresten, da diese zur effektiven Entfernung vom Bauteil bei erhöhten Temperaturen gereinigt werden müssen, und folglich die Lösungsmittelverdampfung und damit verbundene Gefahrenquellen beispielsweise Flammpunkt, Exposition usw. zunimmt.

Bei der destillativen Regenerierung des Lösungsmittels besteht die Gefahr, dass das sich im Destillationssumpf anreichernde hochreaktive Harz thermisch auspolymerisiert. Folglich ist der Ausschluss von Licht im Destillationssumpf ratsam. Die Vermeidung von Einbringung thermischer Energie in den Destillationssumpf gestaltet sich in einem Destillationsprozess hingegen als schwierig. Typische Sumpftemperaturen betragen je nach Lösungsmittel 40 bis 200°C bevorzugter 70 bis 150°C oder 90 bis 130°C. Ein Vernetzen des gelösten Harzes im Sumpf oder von flüchtigen Monomeren in der Destillationseinheit kann zu erheblichen Schäden in der Anlage führen, da der auspolymerisierte Rückstand, sofern überhaupt entfernbar, mechanisch entfernt werden muss und zu langen Standzeiten und teuren Reparaturen der Anlage führen kann.

Die Erfindung zielt daher darauf, ein Verfahren der eingangs genannten Art dahingehend zu verbessern, dass die oben genannten Nachteile überwunden werden und ein Polymerisieren des am Bauteil anhaftenden und in der Folge vom Bauteil abgelösten Harzes während des Reinigungs- und des Regenerationsschritts zu vermeiden.

Weiters soll ein geschlossener, industrieller, auf flüssigen Reinigungsmedien basierender Reinigungsprozess geschaffen werden, der die Exposition des Anwenders gegenüber dem Reinigungsmedium vermeidet, der die kontinuierliche Regeneration des Reinigungsmediums zur Vermeidung von Lösungsmittelabfällen sicherstellt und der den Reinigungsprozess durch eine Kombination an Prozessschritten optimiert und reproduzierbar wiederholen kann.

Zur Lösung dieser Aufgabe sieht die Erfindung bei einem Verfahren der eingangs genannten Art vor, dass dem Reinigungsmedium wenigstens ein Inhibitor zugegeben ist, welcher eine Polymerisation des Harzes während des Reinigungsschritts und/oder des Regenerierungsschritts verzögert, unterdrückt und/oder verhindert. Der Einsatz wenigstens eines Polymerisationsinhibitors ist insbesondere im beheizten, harzkontaminierten Bereich von Vorteil z.B. im Destillationssumpf. Die Stabilisierung mit Inhibitoren verhindert eine thermisch induzierte Polymerisation im Destillationssumpf, was zu einer Verfestigung des Sumpfes führen und folglich die Destillation lahmlegen kann. Außerdem ermöglicht die Stabilisierung eine höhere Beladung des Lösungsmittels im Sumpf und ermöglicht beispielsweise ein Aufkonzentrieren der Harzrückstände vor einer Entleerung des Sumpfes und hat damit weniger Lösungsmittelverluste zur Folge. Die Entleerung des Sumpfes kann konstruktiv so gestaltet werden, dass das Restharz nach Aufkonzentration direkt in einen leeren Chemikalienbehälter gepumpt werden kann, ohne dass der Anwender mit dem Restharz in direkten Kontakt kommen muss.

Gemäß der vorliegenden Erfindung und unter Berücksichtigung der in der Destillationseinheit, insbesondere im Destillationssumpf herrschenden Temperaturen, verhindert der Inhibitor eine thermisch- und/oder lichtinduzierte Polymerisation des Harzes bei einer Temperatur von > 70°C, vorzugsweise > 100°C.

Erfindungsgemäß zum Einsatz gelangende Inhibitoren sind sterisch gehinderte Phenole, Phenol, tert-Butylhydroquinon, 4-Methoxyphenol (MEHQ), Pyrogallol, Nitrophenol, 4-tert-Butylcatechol, 2,6-Di-tert-butylphenol, 6-tert-Butyl-2,4-xylenol, 2,6-Di-tert-butyl-p-kresol (BHT), 2-tert-Butylhydrochinon, 2-tert-Butyl-1,4-benzochinon, 1,3,5-Tris(3,5-di-tert-butyl-4-hydroxybenzyl)-1,3,5-triazinane-2,4,6-trione, 2,2'-Methylenbis(4-methyl-6-tert-butylphenol), 2,2,6,6-Tetramethylpiperidinyloxyl und dessen Derivate, 4-Hydroxy-2,2,6,6-tetramethylpiperidinyloxyl und dessen Derivate, 2,6-Di-tert-butylphenol und eine Mischung von wenigstens zwei der genannten.

Besonders effektiv ist hierbei eine Mischung aus einem aeroben und einem anaeroben Inhibitor, beispielsweise eine Mischung wenigstens eines Hydrochinonderivats oder Phenolderivats mit wenigstens einem Phenothiazin oder Phenothiazinderivat. Überraschenderweise konnte beispielsweise mit einer Mischung aus MEHQ und Phenothiazin oder auch mit einer Mischung aus Pyrogallol und Phenothiazin eine außergewöhnlich hohe Sumpfstabilität sichergestellt werden.

Inhibitoren können dem Reinigungsmedium je nach Problemstellung in Konzentrationsbereichen von 10 ppm bis 20 Vol.-%, bevorzugt 500 ppm bis 10 Vol.-%, noch bevorzugter 1000 ppm bis 5 Vol.-%, zugesetzt werden. Um die bestmögliche Stabilisierung zu garantieren, können Inhibitoren beliebig miteinander gemischt werden.

Für eine zusätzliche Inhibierung der Polymerisation des Harzes ist in bevorzugter Weise vorgesehen, dass Sauerstoff in den Sumpf der Destillationseinheit eingebracht wird, da Sauerstoff als Inhibitor die radikalische Polymerisation unterbinden kann. Der Sauerstoff kann beispielsweise als Luftsauerstoff zugeführt werden. Eine Kombination mit aeroben Inhibitoren ist hierbei sinnvoll.

Auf Grund der erfindungsgemäßen Verhinderung einer Polymerisierung des Harzes in der Destillationseinheit kann die destillative Regenerierung des Reinigungsmediums als kontinuierliches Verfahren durchgeführt werden. Es kann somit eine kontinuierliche Entfernung des abgelösten Harzes aus dem Prozess stattfinden, sodass das für den Reinigungsschritt verfügbare Reinigungsmedium eine geringere Harzbeladung aufweist und ein effizienter Reinigungsprozess gewährleistet ist. Die kontinuierlich durchgeführte destillative Regenerierung des Reinigungsmediums kann gleichzeitig mit dem Reinigungsschritt vorgenommen werden oder zeitlich versetzt. Für die destillative Regenerierung wird eine Teilmenge des Reinigungsmediums in einem Kreislauf geführt, in dem die Destillationseinheit angeordnet ist. Eine bevorzugte Verfahrensweise sieht in diesem Zusammenhang vor, dass das Reinigungsmedium kontinuierlich in einem Fluidkreislauf geführt wird, in dem das Reinigungsmedium von einem Vorratsbehälter oder der Reinigungskammer weggeführt, durch die Destillationseinheit geleitet und zur Reinigungskammer oder dem Vorratsbehälter zurückgeführt wird.

Der Vorratsbehälter kann hierbei sowohl an die Reinigungskammer als auch an die Destillationseinheit angeschlossen sein. Insbesondere kann der Vorratsbehälter sowohl in einen Fluidkreislauf eingebunden sein, in dem das mit Harz beladene Reinigungsmedium der Destillationseinheit zugeführt wird und das in der Destillationseinheit regenerierte Reinigungsmedium dem Vorratsbehälter rückgeführt wird, als auch in einen Fluidkreislauf eingebunden sein, in dem das Reinigungsmedium aus dem Vorratsbehälter der Reinigungskammer zugeführt wird und das in der Reinigungskammer mit Harz beladene Reinigungsmedium dem Vorratsbehälter rückgeführt wird.

Bevorzugt können die beiden Fluidkreisläufe so mit einer Verbindungsleitung miteinander verbunden sein, dass verbrauchtes Reinigungsmedium aus der Reinigungskammer direkt der Destillationseinheit zugeführt wird, d.h. ohne dass dieses zuvor in den Vorratsbehälter gelangt.

Bevorzugt können die beiden Fluidkreisläufe auch so miteinander verbunden sein, dass regeneriertes Reinigungsmedium aus der Destillationseinheit direkt in die Reinigungskammer geführt wird, d.h. ohne dass dieses zuvor in den Vorratsbehälter gelangt.

Das Verfahren wird bevorzugt als geschlossenes Verfahren geführt, bei dem sich das Reinigungsmedium während des Reinigungsschritts und während des Regenerationsschritts stets in geschlossenen Räumen befindet, sodass ein Austreten des bei erhöhten Temperaturen dampfförmigen Reinigungsmediums und die damit verbundene Gefahren, wie z.B. Entflammung, Exposition usw., vermieden werden. Die Reinigungskammer ist zu diesem Zweck bevorzugt als dampfdicht verschließbare Kammer ausgebildet.

Die Beladung und Entladung der zu reinigenden Bauteile findet bevorzugt über die Reinigungskammer statt. Die additiv produzierten, verharzten Bauteile können entweder direkt auf der Bauplattform anhaftend und folglich gemeinsam mit der Bauplattform in die Reinigungskammer eingebracht werden oder vor Eintrag in die Reinigungskammer von der Bauplattform abgelöst, vereinzelt und in geeigneten fluiddurchlässigen Behältnissen, beispielsweise Körben, Netzen oder Käfigen, einzeln fixiert oder als Schüttgut vorliegen. Die Beladung und Entladung der Reinigungskammer können manuell, semiautomatisch oder auch vollautomatisiert erfolgen. Die vollautomatisierte Beladung und Entladung der Reinigungskammer kann beispielsweise über ein Förderband oder Förderrollen erfolgen.

Sollten sich die Bauteile noch auf der jeweiligen Bauplattform befinden, kann die Bauplattform oder können auch mehrere Bauplattformen in der Reinigungskammer beweglich gelagert sein. Um Bauteile, die sich während des Reinigungsprozesses in unerwünschter Weise von der Bauplattform ablösen können, aufzufangen, ist es vorteilhaft auch hier käfig- bzw. korbartige Strukturen um die Bauplattform oder die Bauplattformen herum vorzusehen. Die Drehachse des Korbes, Käfigs, der Bauplattform usw. kann in allen Raumrichtungen gegeben sein, bevorzugt allerdings vertikal und horizontal oder auch nur in eine der beiden Raumrichtungen.

Die Reinigung der Bauplattform(en) in fluiddurchlässigen Behältern, wie z.B. in Körben, vergitterten Behältnissen bzw. das Umgeben der Bauplattform(en) mit Netzen hat den Vorteil, dass Bauteile, die sich während des Reinigungsprozesses ablösen können, im Behältnis verbleiben und nicht frei in der Reinigungskammer herumgewirbelt werden und beispielsweise zu Verstopfungen von Rohrleitungen und Filtern führen können.

In der Reinigungskammer findet die chargenweise Reinigung der Bauteile in einem bevorzugt geschlossenen Prozess statt. Hierzu kann Reinigungsmedium unterschiedlicher Temperaturen aus dem oder den vorgeheizten bzw. vorgekühlten Vorratsbehälter(n) in die Reinigungskammer gelassen werden. Die Reinigungskammer kann mit dem Reinigungsmedium vollständig gefüllt (geflutet) werden. Durch Bewegungen, beispielsweise Schaukelbewegungen oder Rotationsbewegungen, können die Bauteile im Reinigungsmedium mit unterschiedlichen Geschwindigkeiten bewegt werden. Dies führt zu einer turbulenten Relativbewegung der Bauteile gegenüber dem Reinigungsmedium und erhöht somit die Reinigungsleistung. Außerdem kann über Ventile und Düsen Reinigungsmedium, Luft und/oder Druckluft in die Reinigungskammer eingebracht werden, um eine turbulente Strömung erzeugen zu können.

Die Reinigung in der Reinigungskammer kann zusätzlich auch durch Ultraschallwirkung oder vakuumunterstütze Ultraschallwirkung verbessert werden, wobei hier beispielsweise Platten oder Stabultraschallgeneratoren verwendet werden können. Typische Frequenzbereich für Ultraschall sind zwischen 1 und 400 kHz.

Die Bauteile können auch durch Spritz- und Sprühprozesse gereinigt werden. Beispielsweise ist eine Spritz- und/oder Sprühreinigung über Düsen und gerichtete Einlassventile und Einlassgeometrien in die Reinigungskammer möglich. Eine weitere Möglichkeit besteht durch die Anwendung von Druckwechselverfahren. Diese führen durch wechselnde Druckverhältnisse zu einer Verschiebung des Siedepunktes des Reinigungsmediums. Dabei kommt es zum Kochen und Kondensieren des Reinigungsmediums an den Bauteilen, was die Reinigungswirkung entscheidend verbessern kann. Auch das Anlegen von Überdruck in der Reinigungskammer kann zu einer verbesserten Reinigung führen.

Der in der Destillationseinheit erzeugte Dampf des Reinigungsmediums kann auch direkt in die Reinigungskammer geleitet werden. Durch das Bedampfen der Bauteile mit Heißdampf kann ein zusätzlicher Reinigungseffekt erzielt werden. Eine weitere Möglichkeit ist das Anlegen von Vakuum an die Reinigungskammer, um die auf den Bauteilen befindlichen Reste des Reinigungsmediums zu verdampfen. Der Druck in der Reinigungskammer kann hierzu auf wenige Millibar (< 20 mbar) oder sogar bis unter 1 mbar reduziert werden. Dieser Schritt kann als Trocknungsschritt dienen, aber auch als zusätzlicher Prozessschritt, um Harzreste aus kleinen Kavitäten, Sacklöchern und/oder Poren zu ziehen und in einem anschließenden Spül- oder Spritzprozess zu entfernen.

Zusätzlich können die verunreinigten Bauteile in der Reinigungskammer mit Infrarotstrahlung oder Heißluft aufgeheizt werden, um die Viskosität des an den Bauteilen haftenden Restharzes zu erniedrigen. Der Vorteil der Infrarotheizung liegt darin, dass diese bei einer eventuellen finalen Vakuumtrocknung der 3D gedruckten Bauteile die Eigenenergie der Photopolymere erhöhen und die Verdampfung vergünstigen kann.

Eine Trocknung der Bauteile kann über Heißluft, Infrarotstrahlung oder im Vakuum erfolgen. Besonders gute Trocknungsergebnisse werden bei einer Kombination aus Vakuum und Infrarotstrahlung erzielt.

Die oben genannten vorteilhaften Schritte in der Reinigungskammer können, sofern sinnvoll und physikalisch möglich, teilweise auch gleichzeitig durchgeführt werden. In jedem Fall können die Bauteile in jedem genannten Schritt in Bewegung gesetzt werden, beispielsweise durch Rotations- oder Schaukelbewegungen.

Die genannten Schritte in der Reinigungskammer können in beliebiger Reihenfolge beliebig oft wiederholt werden, bis das gewünschte Reinigungsergebnis erreicht werden kann.

Für das in der Reinigungskammer eingesetzte Reinigungsmedium eignen sich prinzipiell alle Fluide und Flüssigkeiten, die in der Lage sind, die Harzreste ab- oder aufzulösen. Typische Reinigungsmedien, die in der Reinigungskammer eingesetzt werden können, sind Wasser, alle Arten von wässrigen Lösungen, Säuren, Basen, tensidische Lösungen, Salzlösungen, sämtliche organische Lösungsmittel wie zum Beispiel Glykole, lineare, verzweigte und modifizierte Alkohole, Kohlenwasserstoffe, aromatische, cycloaliphatische, lineare und verzweigte Kohlenwasserstoffe, Alkene, Alkine, Ether, Ester, Amide, Amine, Ketone, Lactone, Lactame, Nitrile, Nitroverbindungen, Sulfone, Sulfoxide, Harnstoffderivate, Carbonate, Acetate, Malonate, Morpholinderivate, Aminoalkohole, halogenierte Lösungsmittel, fluorierte Lösungsmittel und viele mehr. Natürlich können auch unterschiedliche Lösungsmittelgemische eingesetzt werden.

Besonders gut für den Einsatz in der Reinigungskammer eignen sich alle Reinigungsmedien mit Flammpunkten von größer 50°C, bevorzugt Flammpunkten von größer 60°C, da bei der Verwendung von Reinigungsmedien mit niedrigeren Flammpunkten zusätzliche aufwendige, konstruktive Sicherheitsmaßnahmen hinsichtlich Explosionsschutz getroffen werden müssten.

Typische Reinigungsmedien mit höheren Flammpunkten umfassen Dimethylsulfoxid, Dimethylformamid, Benzylalkohol, Essigsäurebenzylester, Propylglycol, Butylglycol, Ethylglycolacetat, 1-Butoxypropan-2-ol, 1-Propoxypropan-2-ol, 1,2-Propandiol, Butyllactat, Hexan-1-ol, Triethylenglykol, 1,3-Propandiol, Propylencarbonat, 1-Aminopropan-2-ol, Diisopropanolamin, 3-Butoxypropan-2-ol (RG Cleaner 63, DOWANOL^{™} PnB), lineare, verzweigte und cyclische Kohlenwasserstoffe, 1,5-Dimethylglutarat, 1,6-Dimethyladipat und 1,4-Dimethylsuccinat, 2-(2-Butoxyethoxy)ethanol, Hexanole, 2-Pyrrolidon, Dipropylenglykol, Dipropylenglykol-n-propylether, Dipropylenglykolmonomethylether, Tripropylenglykolmonomethylether, Diethylenglycolmonoethyletheracetat, 2-Ethylhexanol, Diethylenglycolmonohexylether, Ethyl-3-(2,4-dimethyl-1,3-dioxolan-2-yl)propanoat, Diethylenglycolmonobutylether, Ethylenglycolmonohexylether, Anisol, Methylanisol, Phenetol, Tetrahydrofurfurylalkohol und 2,2-Dimethyl-1,3-dioxolan-4-methanol, sowie Mischungen aus den genannten.

Zusätzlich zur Harzstabilisierung durch Inhibitoren können Additive zur längeren Haltbarkeit der Lösungsmittel und besserer Prozessführung in der Anlage dem Lösungsmittel beigesetzt werden. Beispiele dafür sind pH-Regulatoren wie Amine beispielsweise Triethylamin oder Aminopropanol, Morpholin und Morpholin-Derivate, Schmieröle, Erdöldestillate, Schaumbrecher, um Schaumbildung zu unterbinden, nicht flüchtige Substanzen, die als Verdünner dienen, Korrosionsinhibitoren, Silikate, Polyphosphate, Sulfonate, organische Sticklstoffsäuren, Zinksalze, Komplexbildner beispielsweise Calziumsalze von Carbonsäuren und/oder Calciumalkylnaphthalinsulfonat.

Photoharze bestehen üblicherweise aus (endgruppenmodifizierten, reaktive) Oligomeren, niedermolekulare mono- und/oder multifunktionelle Reaktivverdünnern, Füllstoffen, Additiven und/oder zumindest einem Photoinitiator. Beispiele für (endgruppenmodifizierte, reaktive) Oligomere sind prinzipiell alle Polymerisate, Polyadditions- und Polykondensationsprodukt beispielsweise Polyether, Polyester, Polyurethane, Polycarbonate, Polyamide, Polythioether, Polythioester, Silikone usw. In den meisten Fällen besitzen die reaktiven Komponenten zumindest eine oder mehrere reaktive Endgruppe(n), die bei der Belichtung durch Strahlung einer geeigneten Wellenlänge unter Zerfall zumindest eines Photoinitiators aushärten und ein festes, vernetztes Polymer bilden. Beispiele für reaktive Endgruppen umfassen ungesättigte Doppelbindungen, Vinyl, Acrylate, Methacrylate, Acrylamide, Allylverbindungen, Norbornene, Vinylether, Epoxide, Oxetane, Maleimide, Thiole, um nur einige zu nennen. Typische Photoinitiatoren bilden bei Zerfall oder Aktivierung Radikale, Kationen, Anionen oder andere aktive Spezies aus, welche die Polymerisation bei Bestrahlung mit bestimmten Wellenlängen auslösen und üblicherweise zu einem vernetzten Photopolymer führen.

Photoharze können auch einen hohen Anteil an organischen, anorganischen, keramischen und/oder metallischen Füllstoffen enthalten und nach der Polymerisation zu Hybridmaterialien führen. Füllstoffe können auch Oligomere, Präpolymere und/oder Polymere sein. Typische Füllstoffanteile bewegen sich hierbei im Bereich von 1 bis 95%. Nach der Reinigung können beispielsweise anorganisch, keramisch oder metallisch gefüllte Photopolymere in Entbinderungs- und Sinterprozessen zu Keramiken oder Metallen weiterverarbeitet werden. Außerdem können genannte Photopolymere auch aus Dual-Cure Systemen bestehen, wobei eine erste Vernetzung zur Formgebung im 3D Druckprozess erfolgt, sowie eine zweite Vernetzung in nachgelagerten Prozessen z.B. thermisch ausgelöst wird.

Ein limitierender Faktor für klassische lithographiebasierte generative Verfahren ist die Harzviskosität. Die oft in Tauchbädern durchgeführten Verfahren benötigen niedrig viskose Harze mit einer Viskosität von üblicherweise kleiner als 2 Pa.s bei Raumtemperatur. Neuartige Prozesse, wie Hot Lithography, sind mittlerweile heizbar und können Photoharzsysteme verarbeiten, die bei Raumtemperatur noch mittelviskose Harze mit einer Viskosität von 5 bis 30 Pa.s, hochviskose Harze mit einer Viskosität von 30 bis mehrere hundert Pascalsekunden und Harze sehr hoher Viskosität von 1.000 Pa.s und höher aufweisen können. Bei erhöhten Prozesstemperaturen zwischen 40 bis 150 °C erniedrigt sich die Viskosität dieser Harze allerdings und sie werden verarbeitbar. Bei hochviskosen Harzsystemen gestaltet sich die Reinigung schwierig, da die am Bauteil anhaftenden Harzreste durch ihre hohe Viskosität schwerer zu entfernen sind. Folglich muss beim Reinigungsprozess das jeweilige Reinigungsmedium ebenfalls erhitzt werden, üblicherweise auf 40 bis 100°C, um den gewünschten Reinigungserfolg zu erzielen. Dies wiederum führt zur vermehrten Verdampfung der eingesetzten Reinigungsmedien und erhöht die Exposition des Anwenders. Aus diesem Grund ist für die Reinigung von Bauteilen, die aus hochviskosen Harzen hergestellt worden sind, ein geschlossener Prozess zu bevorzugen bzw. notwendig.

Im Zusammenhang mit den erwähnten Umständen sieht eine bevorzugte Ausbildung des erfindungsgemäßen Verfahrens vor, dass das an den Bauteilen anhaftende Harz bei 20°C eine Viskosität von > 2 Pa.s, vorzugsweise > 30 Pa.s, aufweist. Rheologische Daten wurden im Zusammenhang mit der vorliegenden Erfindung auf einem Rheometer Anton Paar MCR 102 durchgeführt. Für die Ermittlung der rheologischen Eigenschaften wurde das Rheometer im Rotationsmodus betrieben (PP-25, Scherrate 50 s⁻¹, Temperaturprogramm 25°C bis 70°C mit einer Heizrate von 0,5 K/Min, Messspalt 1 mm).

Der große Vorteil des vorliegenden Reinigungsverfahrens besteht in der kontinuierlichen Aufbereitung des eingesetzten Reinigungsmediums in der Destillationseinheit. Das mit Reaktivharz kontaminierte Reinigungsmedium wird im Sumpf gesammelt und durch Zufuhr von Hitze gegebenenfalls unter Anlegen von Vakuum in die Dampfphase überführt. Während die Harzreste im Sumpf zurückbleiben, kann der reine Dampf des Reinigungsmediums in der Destillationseinheit aufsteigen und nach Kondensation als aufbereitetes Reinigungsmedium in den temperierbaren Vorratsbehälter gelagert werden. Sofern gewünscht, kann der Heißdampf auch direkt in die Reinigungskammer zur Dampfreinigung der Bauteile geleitet werden.

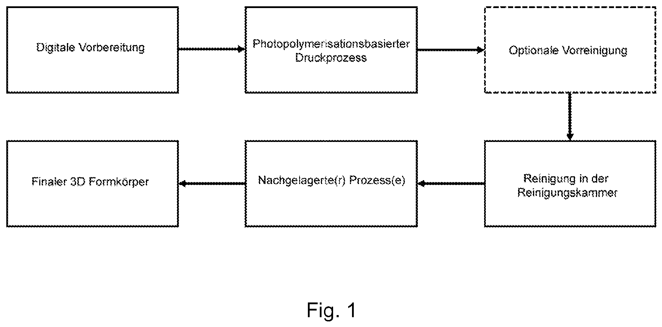

Das erfindungsgemäße Reinigungsverfahren kann in ein herkömmliches Fertigungsverfahren zur generativen schichtweisen lithographischen Herstellung von Bauteilen integriert werden, dessen Schritte schematisch in Fig. 1 dargestellt sind. Das Fertigungsverfahren umfasst einen Schritt der digitalen Vorbereitung, in dem die herzustellenden dreidimensionalen Bauteile digital vorbereitet werden, worauf die Bauteile in einem lithographiebasierten additiven Fertigungsverfahren gedruckt werden. Danach kann gegebenenfalls ein oder mehrere optionale Vorreinigungsschritt(e) der Bauteile stattfinden. Daraufhin wird eine Reinigung der Bauteile gemäß dem erfindungsgemäßen Reinigungsverfahren durchgeführt und abschließend wird in einem oder mehreren nachgelagerten Prozess(en) der finale dreidimensionale Bauteil erhalten.

Im Schritt der Digitalen Vorbereitung werden bereits vorhandene 3D Daten eines Bauteils entsprechend den Spezifikationen des nachfolgenden generativen Fertigungsprozesses für den Druckprozess optimiert und vorbereitet. Diese Bearbeitungsschritte am 3D Modell können u.a. Datenfehleranalyse und evtl. Datenreparatur, Skalierungen, Platzierungen der 3D Modelle auf der digitalen Bauplattform, geometrische Kompensationen beispielsweise einer bei strahlungshärtenden Verfahren auftretenden Überpolymerisation, Erstellung von Stützgeometrien sowie das Generieren von Schichtinformationen umfassen. Alle Teilschritte können manuell, semiautomatisiert oder vollautomatisiert erfolgen. Alternativ können die Druckdaten auch direkt nach verfahrensabhängigen Konstruktionsrichtlinien inkl. aller Teilschritte in einer CAD-Software erstellt werden.

Der Druck mancher Geometrien erfordert entsprechende Stützstrukturen, die im Zuge des Photopolymerisationsprozesses mitgebaut werden. Genannte Stützstrukturen ermöglichen beispielsweise den Bau von extremen Überhängen. Verfahren zur Entfernung solcher Stützstrukturen nach erfolgreichem Druck umfassen beispielsweise mechanische Verfahren durch Pinzetten, Greifarme, Klingen, Fräsen, Bohrer, Bürsten und Schleifvorrichtungen, sowie gerichtete Fluidstahlen, beispielsweise Gasstrahlen, Druckluft, Flüssigkeitsstrahlen, Wasserstrahlen, aber auch Feststoffverfahren wie Trockeneisstrahlen, Schneestrahlen und/oder Sandstrahlen. Die Entfernung von Stützstrukturen kann eventuell auch durch gezielte Sprengung erfolgen, wobei Reaktivgase wie Wasserstoff oder Methan zur Explosion gebracht werden können. Die genannten beispielhaften Verfahren zur Entfernung von Stützstrukturen können manuell, semiautomatisch und vollautomatisiert und beliebig oft und in beliebiger Reihenfolge durchgeführt werden.

Eine weitere Möglichkeit zur Entfernung von Stützstrukturen können lösliche oder schmelzbare Stützstrukturen darstellen. Diese löslichen Stützstrukturen können beispielsweise im Lösungsmittel der Reinigungsanlage aufgelöst werden, wenn beispielsweise das Bauteil sich im Reinigungsmedium nicht löst, die Stützstruktur hingegen schon. Es können aber auch Reinigungskammern/Reinigungsanlagen mit zwei oder mehreren verschiedenen Lösungsmitteln verwendet werden, wobei das erste Lösungsmittel die gestützten Bauteile reinigt und das zweite die Stützstrukturen auflöst (z.B. wasserlösliche Stützstrukturen) oder umgekehrt.

Im Zusammenhang mit einer solchen Nachbearbeitung der Bauteile kann es im Rahmen der vorliegenden Erfindung in bevorzugter Weise auch vorgesehen sein, dass zumindest ein weiterer Bearbeitungsschritt durchgeführt wird zur Entfernung von Stützstrukturen von den Bauteilen, zum Färben der Bauteile, zum chemischen Modifizieren von Bauteiloberflächen und/oder von Volumina der Bauteile und/oder zum Imprägnieren der Bauteile.

In photopolymerisationsbasierten Druckprozess werden die Photoharze in einem lithographiebasierten Verfahren lokal und hochauflösend mit Strahlung bestrahlt, wobei die bestrahlten Bereiche zu einem Feststoff aushärten. Der Prozess erfolgt stufenweisen oder kontinuierlich und die zuvor vorbereiteten dreidimensionalen Strukturen werden aufgebaut. Hierbei befinden sich die Bauteile üblicherweise auf einer Bauplattform. Nach Beendigung des 3D Druckprozesses sind die produzierten 3D Bauteile mit Harz verunreinigt.

Die optionale Vorreinigung kann einen oder mehrere Schritte umfassen, die beliebig oft in beliebiger Reihenfolge durchgeführt werden können. In diesem Prozessschritt können die gedruckten 3D Bauteile entweder auf der Bauplattform verweilen oder von der Bauplattform abgelöst und vereinzelt werden. Dieser Ablöseprozess kann manuell, semiautomatisiert oder vollautomatisiert ablaufen. Ein Beispiel für einen Vorreinigungsprozess ist das Abtropfenlassen von Restharz von den Bauteilen. Dieser Prozess kann durch Temperatur beschleunigt und durch Rotationsbewegungen unterstützt werden. Weitere Möglichkeiten sind die Vorreinigung durch Flüssigkeitssprühnebel, um grobe Harzreste zu entfernen. Die Vorreinigungen kann aber auch durch schnelle Drehbewegungen der Bauteile bzw. der sich auf der Bauplattform oder Bauplattformen befindlichen Bauteile etwa durch Zentrifugieren erfolgen. Die Reinigungswirkung der Zentrifuge kann hierbei durch Erhöhung der Temperatur, Sprühnebeleintrag und unterschiedliche Anordnungen der zu reinigenden Bauteile bzw. der Bauplattform gegenüber der Rotationsachse sowie beispielsweise bewegliche gelagerte Bauplattform erhöht werden. Sofern sinnvoll, kann es im Zuge der Vorreinigung auch zur Entfernung von eventuell benötigten Stützstrukturen kommen.

Nach der Reinigung werden gemäß Fig. 1 üblicherweise noch ein oder mehrere nachgelagerte Prozesse durchlaufen, um zum finalen 3D Bauteil zu gelangen. Typische nachgelagerte Prozesse umfassen Trocknung, Nachhärtung, Beschichtung mit beispielsweise Metallen, Halbmetallen, Keramiken und/oder Kunststoffcoatings, mechanische Nachbearbeitungen der 3D Bauteile, aber auch das Entfernen von eventuell vorhandenen Stützstrukturen, Bestückungsprozesse, das Aufbringen von Leiterbahnen, das Einbringen von Kontaktstiften, das Einfärben der Bauteile und vieles mehr. Trocknungsschritte können an der Luft oder anderen Atmosphären, wie beispielsweise Stickstoff oder Argon, bei Raumtemperatur, bei erhöhten Temperaturen zum Beispiel in Öfen oder Bandöfen, durch diverse Drucklufttechnologien und/oder durch gerichtete Heißluft erfolgen. Die Nachhärtung kann ein thermischer und/oder strahlungsinduzierter Prozess (z.B. UV Lichtquellen) sein. Dies können aber auch andere nachgelagerte Verfahren sein, die zur Herstellung des Endprodukts geeignet sind. Die beschriebenen thermischen Verfahren können bei Temperaturen zwischen 40 und 400°C stattfinden. Im Falle von Entbinderungs- und Sinterprozessen können die thermischen Prozesse auch bei mehreren hunderten Grad und bis über 1.000°C stattfinden. Die thermische Exposition kann chargenweise oder auch kontinuierlich etwa in einem Bandofen erfolgen. Gleiches gilt für die Strahlungsnachhärtung, die ebenfalls chargenweise oder beispielsweise in Strahlungsbandöfen kontinuierlich erfolgen kann. Die beschriebenen Nachhärtungsschritte können in beliebiger Reihenfolge beliebig oft durchgeführt werden, um die finalen Eigenschaften des 3D Bauteils zu erhalten.

Schlussendlich wird ein finaler 3D Bauteil erhalten. Beispiele für solche 3D Bauteile sind medizinische, zahnmedizinische- und kieferorthopädische Anwendungen wie zum Beispiel intraorale Anwendungen wie zum Beispiel Regulierungen, Aligner, Schienen oder Attachments, elektronische Komponenten, wie zum Beispiel Steckverbinder, Konnektoren, Stecker oder Gehäuse, 3D gedruckte Schuhsohlen, Teile für die Luft- und Raumfahrtindustrie, Anwendungen im militärischen Bereich, Anwendungen im Bereich Konsumgüter, Anwendungen im Bereich Mobilität, Automotiv und Elektromobilität, 3D gedruckte Teile für den Einsatz in der Energiebranche, Anwendungen im Sportbereich, wie zum Beispiel Schuhsohlen oder Dämpfungselemente, Anwendungen im Bereich Printed Electronics, um nur einige zu nennen.

Es wird weiters eine Vorrichtung zur Durchführung des erfindungsgemäßen Reinigungsverfahrens beschrieben, umfassend eine Reinigungskammer, einen mit der Reinigungskammer verbindbaren Vorratsbehälter für ein Reinigungsmedium, und eine Destillationseinheit, deren Zufluss über eine erste Leitung mit der Reinigungskammer oder dem Vorratsbehälter und deren Abfluss über eine zweite Leitung mit der Reinigungskammer oder dem Vorratsbehälter verbindbar ist, um der Destillationseinheit mit Harz beladenes Reinigungsmedium aus der Reinigungskammer oder dem Vorratsbehälter zuzuführen und gleichzeitig regeneriertes Reinigungsmedium aus der Destillationseinheit in die Reinigungskammer oder den Vorratsbehälter rückzuführen.

Der Vorratsbehälter ist über eine Zuflussleitung und eine Abflussleitung mit der Reinigungskammer verbunden, um Reinigungsmedium im Kreislauf zu führen.

Bevorzugt können zwei Vorratsbehälter vorgesehen sein, von denen jeder über eine Zuflussleitung und eine Abflussleitung mit der Reinigungskammer verbunden ist.

Es versteht sich von selbst, dass die hier beschriebenen Strategien nicht nur auf generative gefertigte Bauteile beschränkt sind. Vielmehr können die beschriebenen Stabilisierungsstrategien auch für alle anderen denkbaren Harzsysteme angewendet werden. Beispiele dafür sind in jedem Fall ungesättigte Polyesterharze, Alkydharze, Klebstoffe und/oder Coatings jeder Art.

Die Erfindung wird nachfolgend anhand von Ausführungsbeispielen näher erläutert. Fig. 1 zeigt die Schritte eines lithographischen generativen Fertigungsverfahrens, Fig. 2 zeigt eine erste Ausführung einer Vorrichtung zur Durchführung des erfindungsgemäßen Verfahrens, Fig. 3 zeigt eine zweite Ausführung einer Vorrichtung zur Durchführung des erfindungsgemäßen Verfahrens, Fig. 4a und 4b zeigen einen fluiddurchlässigen Behälter zur Anordnung in der Reinigungskammer, Fig. 5a-5f zeigen verschiedene Anordnungen der zu reinigenden Bauteile in dem fluiddurchlässigen Behälter und Fig. 6 zeigt eine weitere Ausführung einer Vorrichtung zur Durchführung des erfindungsgemäßen Verfahrens.

In Fig. 1 ist die Abfolge von Verfahrensschritten eines typischen lithographischen generativen Fertigungsverfahrens schematisch dargestellt. Die Verfahrensschritte umfassen, wie bereits weiter oben näher ausgeführt, einen Schritt der digitalen Vorbereitung des Druckprozesses, den photopolymerisationsbasierten Druckprozess, eine optionale Voreinigung und danach die erfindungsgemäße Reinigung des gedruckten Bauteils zur Entfernung von an dem Bauteil anhaftendem, unreagiertem Harz. Die gereinigten Bauteile werden dann nachgelagerten Prozessen unterworfen und schließlich wird der finale Bauteil erhalten.

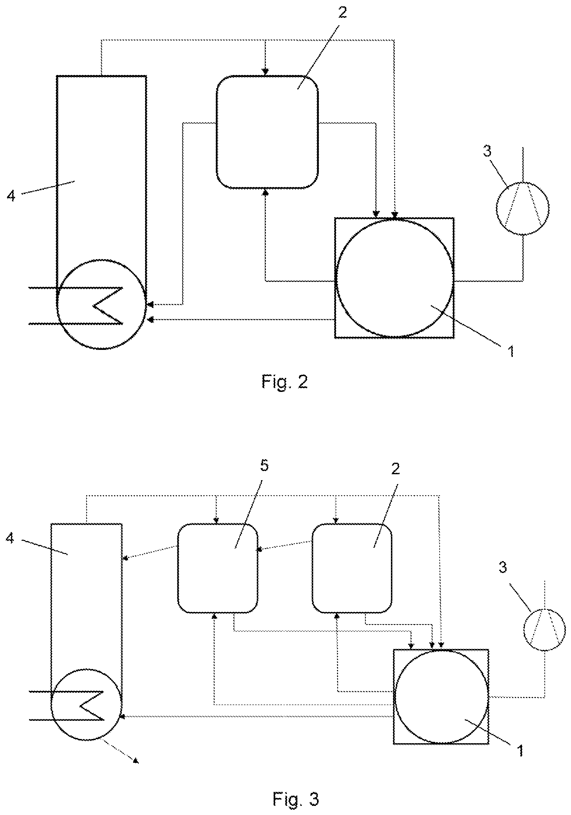

Fig. 2 zeigt eine erste Ausführungsform einer Vorrichtung zur Durchführung des erfindungsgemäßen Verfahrens. Die Vorrichtung umfasst eine Reinigungskammer 1, einen Vorratsbehälter 2 für Reinigungsmedium, eine an die Reinigungskammer angeschlossene Vakuumpumpe 3 und eine Destillationseinheit 4. Die zu reinigenden Bauteile werden zuerst in die Reinigungskammer 1 eingebracht. Im Vorratsbehälter 2 gelagertes Reinigungsmedium kann nun in die Reinigungskammer 1 eingebracht werden und im Kreislaufverfahren wieder in den Vorratsbehälter 2 rückgeführt werden oder direkt in der Destillationseinheit 4 aufgereinigt und durch Kondensation als Flüssigkeit in den Vorratsbehälter 2 zurückgeführt werden. Der direkte Eintrag von Heißdampf aus der Destillationseinheit 4 in die Reinigungskammer 1 ist ebenfalls möglich. Eine an die Reinigungskammer 1 angeschlossene Vakuumpumpe 3 ermöglicht die Durchführung eines Druckwechselverfahrens sowie eine Vakuumtrocknung.

Fig. 3 zeigt eine abgewandelte Ausbildung der Vorrichtung, welche sich von der Ausbildung gemäß Fig. 2 durch die Anordnung von zwei Vorratsbehältern 2 und 5 auszeichnet.

Durch das Vorhandensein von zwei oder mehreren Vorratsbehältern 2 und 5 können Reinigungsprozesse mit unterschiedlich stark beladenen Reinigungsmedien durchgeführt werden. Beispielsweise könnten das höher harzkontaminierte Reinigungsmedium im Vorratsbehälter 2 zu einer ersten Grobreinigung herangezogen werden, wohingegen die anschließende Feinreinigung mit Reinigungsmedium höherer Reinheit aus dem Vorratsbehälter 5 durchgeführt wird. Eine solche Prozessführung kann das Reinigungsergebnis verbessern. Der Durchsatz an zu reinigenden Bauteilen kann zum Beispiel durch eine zweite oder weitere Reinigungskammer (nicht dargestellt) erhöht werden.

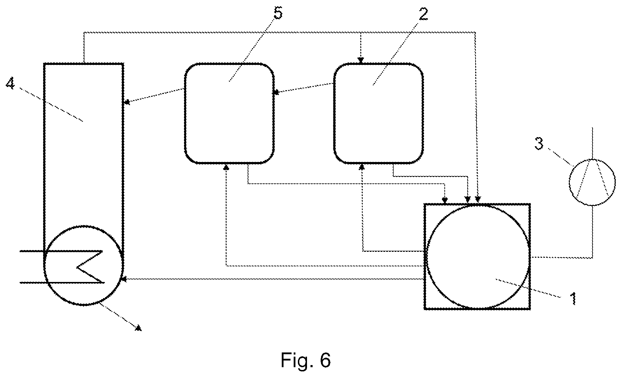

Fig. 6 zeigt einen ähnlichen Aufbau wie in Fig. 3, wobei die Zuleitung des frisch destillierten Lösungsmittels jedoch nur in den Vorratsbehälter 2 erfolgt und der Vorratsbehälter 5 per Überlauf aus dem Vorratsbehälter 2 befüllt wird.

Die in Fig. 2, 3 und 6 skizzierten Reinigungskammern sind aus Gründen der Übersichtlichkeit einfach gehalten. Besagten Reinigungskammern können selbstverständlich beliebig viele zusätzliche Reinigungskammern, Rohrleitungen, Kreisläufe, Zusatztanks, Ölabscheider, Wasserabscheider, verschiedenste Ventile, Wärmeüberträger, Kolonnen, Trichter, Filter, Absperrhähne, Mischventile, Pumpen, Verdichter, Kompressoren, Vakuumpumpen, Isolierungen, Trockner, Verdampfer, Kühler, Ventilatoren, Membranen, Regler, Ultraschallquellen, Kondensatoren, Infrarotquellen, Druckluftzufuhren, Heizungen, Heißluftzufuhren und andere verfahrenstechnische Komponenten hinzugefügt werden, um die reibungslose Funktion der Reinigungskammer zu garantieren. Des Weiteren können sie mit unterschiedlichsten Mess- und Regelungsequipment zur manuellen, semiautomatisierten und vollautomatisierten Prozessüberwachung und Prozesssteuerung bzw. -regelung ausgestattet sein.

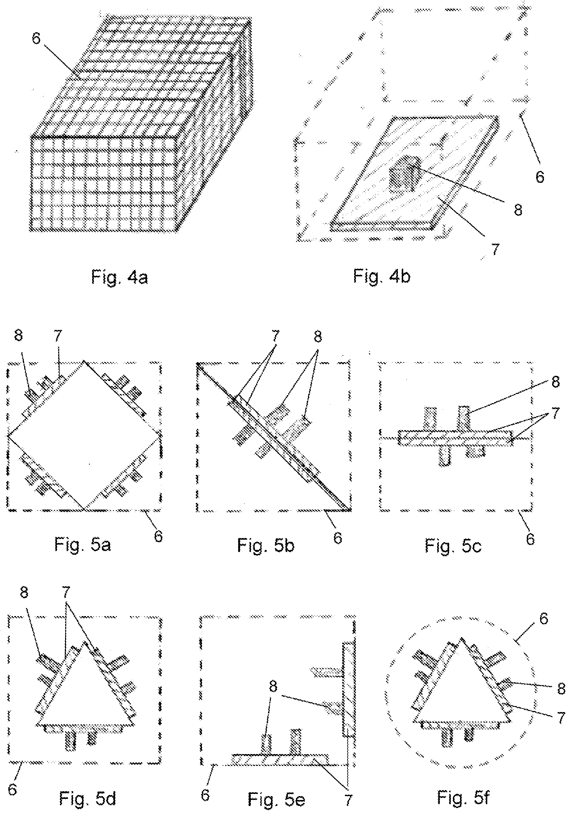

Fig. 4a zeigt schematisch einen fluiddurchlässigen Behälter 6, der als quaderförmiger Korb, als Gitter oder als Netz ausgebildet ist. Der Behälter 6 kann aus Metall und/oder Kunststoff bestehen und mit unterschiedlichen Maschenweiten ausgebildet sein. Die Korbgeometrie kann beliebig gewählt werden, beispielsweise rechteckig, quadratisch, rund, oval, um nur einige Beispiele zu nennen. Die Korblöcher können unterschiedliche Geometrien besitzen, beispielsweise rechteckig, quadratisch, rund, oval oder sonstige Spezialgeometrien.

Fig. 4b zeigt die im Behälter 6 angeordnete Bauplattform 7 mit darauf angeordneten Bauteilen 8.

Die Fig. 5a-5f zeigen verschiedene Möglichkeiten zur Anordnung und Befestigung der Bauplattformen 7 im Inneren des Behälters 6. Bei der Variante gemäß Fig. 5a sind vier Bauplattformen 7 im Querschnitt gesehen in Form eines Quadrats angeordnet, das relativ zum Behälter 6 um 45° verdreht ist. Bei der Variante gemäß Fig. 5b liegen zwei Bauplattformen 7 mit ihrer Rückseite aneinander und sind im Querschnitt gesehen entlang einer Diagonalen des Behälters 6 angeordnet. Bei der Variante gemäß Fig. 5c liegen zwei Bauplattformen 7 ebenfalls mit ihrer Rückseite aneinander, sind aber entlang einer waagrechten Mittelebene im Behälter 6 angeordnet.

Wie in Fig. 5d ersichtlich ist, können die Bauplattformen 7 im Querschnitt gesehen auch ein Dreieck aufspannen. Alternativ können die Bauplattformen 7, wie in Fig. 5e gezeigt, an den Wänden des Behälters 6 angeordnet sein. Anhand der Fig. 5f ist gezeigt, dass der Behälter 6 auch zylinderförmig ausgebildet sein kann.

Um den Reinigungsvorgang effizienter zu gestalten, können idealerweise mehrere Bauplattformen 7 gleichzeitig in die Reinigungskammer 1 eingeschleust werden. Außerdem ist eine Platzierung der Bauplattformen 7 nach außen hin, also zur Innenseite der Behälterfläche vorteilhaft für die Reinigung.

### BEISPIELE

Die folgenden Beispiele werden zum Zweck der Veranschaulichung verschiedener möglicher Ausführungsformen der Erfindung angegeben und sollen die offenbarte Erfindung in keiner Weise einschränken. Die vorliegenden Beispiele der beschriebenen Verfahren sind als repräsentativ und beispielhaft und nicht als Einschränkung des Schutzumfangs der Offenbarung zu verstehen.

### Beispiel 1:

Beispiel 1 beschreibt die Reinigung einfacher Strukturen mit großen Oberflächen. In diesem Beispiel wird eine Reinigung in einer Vorrichtung beschrieben, die der Apparatur gemäß Fig. 2 ähnelt. In diesem Beispiel werden 20 dentale Kunststoffschienen (Aligner) digital vorbereitet und in einem stereolithographiebasierten Prozess aus einem niedrigviskosen Harz gedruckt. Nach dem Druck werden die verharzten Aligner von der Bauplattform abgelöst und in einen Korb gelegt, der automatisch in die Reinigungskammer eingebracht wird. Im ersten Reinigungsschritt wird die Reinigungskammer evakuiert und die Teile Heißdampf ausgesetzt, um eine Grobreinigung zu erreichen. Anschließend wird aus dem Vorratsbehälter 55°C heißes Lösungsmittel (2-Butoxyethanol) als Reinigungsmedium unter langsamen Drehen des Korbes auf die Aligner gespritzt. Das verwendete Lösungsmittel wird in Vorratsbehälter zurückgeführt. Anschließend wird die Reinigungskammer mit Lösungsmittel geflutet und unter langsamen vertikalen Drehen des Korbes für 2 Minuten Ultraschall ausgesetzt. Danach wir die Kammer wieder entleert und evakuiert. In einem letzten Reinigungsschritt wird die Reinigungskammer geflutet und durch Eintrag von zuerst Druckluft und anschließend gezielten Lösungsmittelstahlen eine turbulente Strömung erzeugt. Dabei werden die letzten Harzreste entfernt und das kontaminierte Lösungsmittel wird in den mit Inhibitoren stabilisierten Destillationssumpf geleitet. Abschließend wird die Endreinigung durch Einleiten von Heißdampf aus der Vakuumdestillation in die Reinigungskammer erreicht. Die Bauteile werden dadurch erwärmt und Lösungsmittel kondensiert an den Bauteilen, um die Feinreinigung zu gewährleisten. Im abschließenden Vakuumtrocknungsschritt werden die Lösungsmittelreste dann von den Bauteilen entfernt. Nach Belüftung der Waschkammer werden die getrockneten Aligner automatisch aus der Reinigungskammer entfernt und in einer UV-Bandanlage mit Strahlung nachgehärtet, um das finale Produkt zu erreichen.

### Beispiel 2:

Beispiel 2 beschreibt die Reinigung komplexer Strukturen mit dünnen Kanälen und engen Sacklöchern. In diesem Beispiel wird eine Reinigung in einer Vorrichtung beschrieben, die jener von Fig. 3 ähnlich ist. In diesem Beispiel werden Mikrodüsen mit 30 mm Länge, 5 mm Breite und einer Höhe von 8 mm mit einer Doppelreihe an durchgängigen Löchern hergestellt. 500 dieser Mikrodüsen werden digital vorbereitet und in einem bei erhöhter Temperatur durchgeführten lithografischen 3D-Druckverfahren (Hot Lithography Prozess) aus hochviskosem Harz generativ gefertigt. Anschließend werden die verharzten Mikrodüsen auf der Bauplattform in eine Zentrifuge überführt und zentrifugiert. Nach der Vorreinigung werden die Mikrodüsen samt Bauplattform in die Reinigungskammer der Vorrichtung eingeschleust und die Reinigungskammer evakuiert. Anschließend wird Heißdampf aus der Destillationseinheit direkt in die Reinigungskammer eingeleitet, um Grobverschmutzungen zu entfernen und die Bauteile aufzuwärmen. Danach wird aus dem ersten Vorratsbehälter 70 °C heißes 2-Butoxyethanol durch Spritzreinigung in die Reinigungskammer geführt und die Bauplattform dabei mit 6 Umdrehungen pro Minute gedreht. Das stärker harzkontaminierte Lösungsmittel aus dem ersten Vorratsbehälter wird von der Reinigungskammer wieder zurück in den ersten Vorratsbehälter im Kreis geführt.

Im zweiten Prozessschritt wird die Reinigungskammer mit temperiertem Lösungsmittel aus dem ersten Vorratsbehälter geflutet und unter langsamen Drehen für 1 Minute Ultraschall ausgesetzt. Anschließend wird das stark kontaminierte Lösungsmittel zur Regeneration in den Sumpf der mit Inhibitoren stabilisierten Destillationseinheit geleitet. Nachdem die Grobreinigung abgeschlossen ist, wird die Reinigungskammer für 1 Minute evakuiert, um Restharz aus den noch immer verschlossenen Bauteilkanälen und Sacklöchern zu ziehen. Gleich darauf wird 70°C heißes, reines Lösungsmittel aus dem zweiten Vorratsbehälter in die Reinigungskammer geleitet und die Mikrodüsen auf der Bauplattform werden unter langsamem Drehen für 1 Minute Ultraschall ausgesetzt. Die Bauteile werden zur abschließenden Feinreinigung mit Heißdampf aus der Destillationseinheit bedampft, bevor sie im Vakuum getrocknet werden. Nach Belüftung der Reinigungskammer werden die gereinigten und getrockneten Mikrodüsen im nachgelagerten thermischen Ofenprozess zum finalen Produkt weiterverarbeitet.

### Beispiel 3:

Beispiel 3 beschreibt die Effizienz der Vakuumtrocknung von mit Lösungsmittel gereinigten photoharzbasierten 3D Bauteilen. Da Photopolymere eine geringe Eigenwärme besitzen, wird von unzureichender Trocknung ausgegangen, da es sich um einen endothermen Prozess handelt.

Verharzte rechteckige Steckverbinder aus dem Material "Evolution" der Fa. Cubicure (Wien, Österreich) mit 35,5 mm Länge, 11,8 mm Breite und einer Höhe von 14,8 mm mit einer Doppelreihe an sieben durchgängigen Löchern werden im Ultraschallbad mit in Tabelle 1 beschriebenen Lösungsmitteln für eine bestimmte Zeit bei einer bestimmten Temperatur (Tabelle 1: Lösungsmittelexposition) gereinigt. Die Reinigung der Bauteile im Ultraschallbad wird einer reinen Rührbewegung gegenüber bevorzugt, da der Ultraschall die am Bauteil und in den Löchern des Bauteils anhaftenden Harzreste erfolgreich ablöst. Eine Kombination aus Ultraschall und langsamer Rührbewegung ist hierbei besonders effektiv. Im Anschluss an die erfolgte Reinigung werden die nassen Bauteile im Vakuumtrocknungsschrank für eine bestimmte Zeit bei einer definierten Temperatur (Tabelle 1: Vakuumtrocknung) auf unter 10 mbar evakuiert. Nach dem Entfernen der Steckverbinder aus dem Vakuumofen werden die Bauteile auf Lösungsmittelrückstände untersucht und das Ergebnis der Vakuumtrocknung festgestellt (Tabelle 1: Ergebnis). Wie in Tabelle 1 ersichtlich, konnten die Steckverbinder alle erfolgreich im Vakuum getrocknet werden, ohne Lösungsmittelspuren an der Bauteiloberfläche zu hinterlassen, wobei in manchen Fällen trotz der trockenen Oberfläche noch ein leichter, nicht störender Lösungsmittelgeruch wahrnehmbar war. Folglich kann die Vakuumtrocknung von photopolymerbasierten 3D gedruckten Kunststoffbauteilen durchaus überraschend als schnell und effizient eingestuft werden.

**Tabelle 1: Übersicht über die Vakuumtrocknung von photopolymerbasierten 3D Formkörpern nach Lösungsmittelreinigung**

| **Lösungsmittel** | **Lösungsmittelexposition** | **Vakuumtrocknung** | **Ergebnis** |
|---|---|---|---|
| Isopropanol | 12 min bei 45°C | 3 min bei 23°C | Trocken |
| Essigsäure-n-butylester | 15 min bei 45°C | 4 min bei 23°C | Trocken |
| 2-Ethoxyethanol | 10 min bei 45°C | 4 min bei 23°C | Trocken |
| DMSO | 10 min bei 60°C | 5 min bei 70°C | Trocken |
| Tripropylenglycol-monomethylether | 5 min bei 60°C | 5 min bei 70°C | Trocken |
| RG Cleaner 63 | 5 min bei 60°C | 5 min bei 70°C | Trocken |

### Beispiel 4:

Beispiel 4 dient zur Veranschaulichung der Reinigungswirkung durch Bedampfen von Photopolymeren mit Heißdampf. Ein ungereinigter photopolymerbasierter 3D Formkörper aus dem Photopolymerharz "Evolution" der Fa. Cubicure (Wien, Österreich) wurde im Destillationskopf einer Mikrodestillationsanlage platziert. Als Lösungsmittel wurde Isopropanol verwendet, welches im Sumpf der Destillation aufbewahrt wurde. Das Ölbad zur Heizung des Sumpfes wurde auf ca. 80°C erhöht und ein leichtes Vakuum von 600 mbar an die Anlage angelegt, um Dampf entstehen zu lassen. Der entstandene Dampf stieg im Dampfrohr auf und erwärmte das Bauteil und kondensierte schließlich an ihm. Das Kondensat löste dabei Harzreste vom Bauteil ab und befördert sie wieder in den Sumpf. Ein Teil des Lösungsmitteldampfes kondensierte in der Zwischenzeit im Kühler der Destillationsapparatur und wurde in einem Vorlagekolben gesammelt. Nach ca. 20 Minuten wird das Experiment abgebrochen und das gereinigte Bauteil aus der Destillationsapparatur entfernt. Eine Sichtprobe ergibt ein gut gereinigtes Teil, das keine Harzrückstände mehr auf den exponierten Oberflächen aufweist. Folglich kann das Bedampfen mit Heißdampf von verharzten photopolymerbasierten 3D Formkörpern als eine effiziente Reinigungsmethode zur Entfernung von Harzresten von Oberflächen eingestuft werden.

### Beispiel 5:

Photopolymerbasierte 3D Formkörper werden üblicherweise aus einem strahlungshärtenden Harz schichtweise aufgebaut. Die Bauteiloberfläche ist noch mit Restharz verunreinigt, welches durch Waschprozesse mit Fluiden entfernt werden muss. Um das mit teilweise hochreaktivem Harz beladene Reinigungsmedium regenerieren zu können, sind, wie in diesem Beispiel veranschaulicht, Inhibitoren vorgesehen.

Um eine Lösungsmittelreinigungsanlage zu simulieren, wurde ein 100 mL Braunglas-Einhalsrundkolben mit Soxhlet-Aufsatz (Fassungsvermögen 30 mL) und Rückflusskühler aufgebaut. Der Rundkolben stellt in diesem Experiment den Destillationssumpf dar, in dem das Lösungsmittel mit dem Restharz zur destillativen Regeneration unter magnetischer Rührung erhitzt wird. Der Soxhlet-Aufsatz selbst simuliert eine Reinigungskammer, in der ein verharzter Steckerbauteil platziert wird. Der im Rundkolben erzeugte Lösungsmitteldampf kann über das Dampfrohr des Soxhlet-Aufsatzes in den Rückflusskühler aufsteigen, wo er kondensiert und als warmes/heißes Lösungsmittel in den Soxhlet-Aufsatz tropft. Mit der Zeit füllt sich die Soxhlet-Kammer mit Lösungsmittel, welches das Bauteil reinigt. Sobald der steigende Flüssigkeitsspiegel im Soxhlet-Aufsatz die Höhe des Abflussrohrs erreicht hat, entleert sich das mittlerweile mit Harz beladene Lösungsmittel in den Sumpf und kann erneut destillativ regeneriert werden, wobei das entfernte Restharz im Sumpf verbleibt.

Um eine möglichst große Vielfalt an möglichen Photoharzverunreinigungen im Destillationssumpf abbilden zu können, wurde eine Mischung aus Reaktivverdünnern, reaktiven und unreaktiven Oligomeren sowie Initiatoren, Additiven und Füllstoffen hergestellt. Die Mischung beinhaltete beispielsweise folgende mono- und/oder multifunktionelle Verbindungen: Vinylverbindungen, Methacrylate, Acrylate, Acrylamide, Epoxide, Oxetane, Thiole, radikalische und kationische Photoinitiatoren, thermische Initiatoren, Maleimide, tertiäre, sekundäre und primäre Amine, Divinylether, Allylverbindungen, Silikone, Polyester, Polyurethane, Polyether, Polycarbonate, organischen und anorganischen Füllstoffe und viele mehr. Die Gesamtmasse der viskosen Photoharzmischung im Sumpf betrug 41,5 g. Diese wurden im Sumpf vorgelegt und mit 60 mL (~52,8 g) des modifizierten Alkohols RG Cleaner 63 (3-Butoxy-2-propanol) vermischt. Das Experiment wurde unter Lichtausschluss im Sumpf durchgeführt.

Im Soxhlet-Aufsatz wurde ein ungereinigtes Bauteil aus dem Material "Evolution" der Fa. Cubicure (Wien, Österreich) platziert und die nicht stabilisierte Mischung wurde dann unter Rühren auf 100°C erhitzt. Anschließend wurde die Apparatur vorsichtig unter Vakuum gesetzt, bis ein Enddruck von 40 mbar erreicht wurde. Kurz darauf entstand Dampf, der anschließend vom Kühler in den Soxhlet-Apparat tropfte und die Soxhlet Kammer langsam füllte. Eine Stunde nach Experimentbeginn wurde beobachtet, dass kein Lösungsmittel mehr im Rückflusskühler kondensierte. Die Kontrolle des Sumpfes ergab ein auspolymerisiertes, hochvernetztes Harz, welches trotz großer Anstrengung nicht mehr aus dem Kolben entfernt werden konnte.

Im zweiten Versuch wurde die gleiche Photoharzzusammensetzung in der gleichen Menge modifizierten Alkohols im Sumpf gelöst und ein verharztes Bauteil in den Soxhlet-Aufsatz gegeben. Diesmal wurden dem Destillationssumpf jeweils 4,8 Gew.-% an MEHQ und Phenothiazin als Inhibitoren hinzugesetzt. Überraschenderweise konnte die Kombination aus MEHQ und Phenothiazin den Sumpf nach Erhöhung der Temperatur auf 100°C bei 40 mbar Druck für insgesamt 5 Tage stabil halten, ohne dass das Harz im Einhalsrundkolben auspolymerisierte. Während dieser Zeit wurden insgesamt zehn Bauteile aus dem Photopolymerharz "Evolution" erfolgreich gereinigt, wobei das abgewaschene Harz im Sumpf angereichert wurde. Durch das zeitweilige Anreichern des reinen Lösungsmittels im Soxhlet-Aufsatz kam es zur Schwankung der Harzkonzentration im Sumpf zwischen 44 und 67 Gew.-%. Diese erheblichen Konzentrationsänderungen im Sumpf unterstreichen die hohe Stabilität durch die Zugabe von Inhibitoren.

Die erfinderische Stabilisierung des Destillationssumpfes mit Inhibitoren ist daher eine Grundvoraussetzung, um eine erfolgreiche Reinigung von harzbasierten 3D gedruckten Formkörpern in einer Reinigungsvorrichtung mit kontinuierlicher Destillation durchführen zu können.

### Beispiel 6:

Um die neuartige Stabilisierung des Destillationssumpfes des Reinigungsapparats nochmals hervorzuheben, wurde das Experiment aus Beispiel 5 wiederholt. Diesmal wurde allerdings Butyllactat (65,6 g) als Lösungsmittel herangezogen. Im Lösungsmittel wurde eine Mischung an hochviskosen photoreaktiven Harzprodukten (35,2 g) der Fa. Cubicure (Wien, Österreich) gelöst. Im ersten Versuch wurde eine nicht stabilisierte Lösung auf eine Sumpftemperatur von 130°C bei 50 mbar Druck erhitzt, welche nach zirka zwei Stunde vollständig auspolymerisiert war. Daraufhin wurde die gleiche Menge Harzmischung und Lösungsmittel mit zusätzlich jeweils 2,5 Gew.-% Pyrogallol und Phenothiazin stabilisiert. Wie in Beispiel 5 beschrieben wurden auch diesmal drei verharzte Bauteile in der Soxhlet Apparatur gereinigt. Nach 24 Stunden war der inhibierte Sumpf noch immer flüssig und somit stabil, woraufhin das erfolgreiche Experiment abgebrochen wurde. Die Harzkonzentration im Sumpf variierte während dieser Zeit zwischen 35 und 49 Gew.-%, was die hohe Wirkung des Inhibitors bestätigt. Wie schon im Beispiel 5 konnte die erfinderische Stabilisierung des mit Stereolithographie-Harz verunreinigten Lösungsmittels im Reinigungsapparat bestätigt werden.

## Patentansprüche

1. Verfahren zur Reinigung von Bauteilen, an denen unreagiertes Harz anhaftet, insbesondere von mittels eines lithographischen generativen Fertigungsverfahrens hergestellten Bauteilen, umfassend
- einen Reinigungsschritt, bei dem die Bauteile in eine Reinigungskammer eingebracht werden, die Bauteile in der Reinigungskammer mit einem Reinigungsmedium kontaktiert werden, wodurch Harz von den Bauteilen abgelöst wird, und das mit dem abgelösten Harz beladene Reinigungsmedium aus der Reinigungskammer ausgebracht wird, und
- einen Regenerierungsschritt, bei dem das beladene Reinigungsmedium einer Destillationseinheit zugeführt wird, in welcher das kontaminierte Reinigungsmedium durch destillative Abtrennung des Harzes regeneriert wird, **dadurch gekennzeichnet, dass**
- dem Reinigungsmedium wenigstens ein Inhibitor zugegeben ist, welcher eine Polymerisation des Harzes während des Reinigungsschritts und/oder des Regenerierungsschritts verzögert oder verhindert, **dadurch gekennzeichnet, dass** der wenigstens eine Inhibitor eine thermisch- und/oder lichtinduzierte Polymerisation des Harzes bei einer Temperatur von > 70°C, vorzugsweise > 100°C verhindert,
- wobei der wenigstens eine Inhibitor Phenothiazin oder ein Phenothiazin-Derivat ist
- oder der wenigstens eine Inhibitor ausgewählt ist aus der Gruppe bestehend aus sterisch gehinderten Phenolen, Phenol, tert-Butylhydroquinon, 4-Methoxyphenol, Pyrogallol, Nitrophenol, 4-tert-Butylcatechol, 2,6-Di-tert-butylphenol, 6-tert-Butyl-2,4-xylenol, 2,6-Di-tert-butyl-p-kresol, 2-tert-Butylhydrochinon, 2-tert-Butyl-1,4-benzochinon, 1,3,5-Tris(3,5-di-tert-butyl-4-hydroxybenzyl)-1,3,5-triazinane-2,4,6-trione, 2,2'-Methylenbis(4-methyl-6-tert-butylphenol), 2,2,6,6-Tetramethylpiperidinyloxyl und dessen Derivate, 4-Hydroxy-2,2,6,6-tetramethylpiperidinyloxyl und dessen Derivate, 2,6-Di-tert-butylphenol und einer Mischung von wenigstens zwei der genannten.

2. Verfahren nach Anspruch 1, **dadurch gekennzeichnet, dass** als Inhibitor eine Mischung aus einem aeroben und einem anaeroben Inhibitor, wie z.B. eine Mischung wenigstens eines Hydrochinonderivats oder Phenolderivats mit wenigstens einem Phenothiazin oder Phenothiazinderivat, eingesetzt wird.

3. Verfahren nach Anspruch 1 oder 2, **dadurch gekennzeichnet, dass** der wenigstens eine Inhibitor in einer Konzentration von 50 ppm bis 20 Vol.-%, vorzugsweise 500 ppm bis 10 Vol.-%, insbesondere 1.000 ppm bis 5 Vol.-%, des Reinigungsmediums vorhanden ist.

4. Verfahren nach Anspruch 1, 2 oder 3, **dadurch gekennzeichnet, dass** Sauerstoff in den Sumpf der Destillationseinheit eingebracht wird, vorzugsweise in Anwesenheit eines aeroben Inhibitors.

5. Verfahren nach einem der Ansprüche 1 bis 4, **dadurch gekennzeichnet, dass** das Reinigungsmedium kontinuierlich in einem Fluidkreislauf geführt wird, in dem das Reinigungsmedium von einem Vorratsbehälter oder der Reinigungskammer weggeführt, durch die Destillationseinheit geleitet und zur Reinigungskammer oder dem Vorratsbehälter zurückgeführt wird.

6. Verfahren nach einem der Ansprüche 1 bis 5, **dadurch gekennzeichnet, dass** das Reinigungsmedium, insbesondere von der Destillationseinheit kommend, dampfförmig in die Reinigungskammer eingebracht wird.

7. Verfahren nach einem der Ansprüche 1 bis 6, **dadurch gekennzeichnet, dass** die Bauteile im auf einer Bauplattform angeordneten Zustand in die Reinigungskammer eingebracht werden.

8. Verfahren nach einem der Ansprüche 1 bis 6, **dadurch gekennzeichnet, dass** die Bauteile in vereinzeltem Zustand in die Reinigungskammer eingebracht werden.

9. Verfahren nach einem der Ansprüche 1 bis 8, **dadurch gekennzeichnet, dass** die Bauteile in einem fluiddurchlässigen Behälter, wie z.B. einem Käfig, Netz oder Korb, angeordnet werden, insbesondere im fluiddurchlässigen Behälter befestigt werden, und solcherart dem Reinigungsschritt unterworfen zu werden.

10. Verfahren nach Anspruch 9, **dadurch gekennzeichnet, dass** der fluiddurchlässige Behälter während des Reinigungsschritts um wenigstens eine Achse gedreht wird.

11. Verfahren nach einem der Ansprüche 1 bis 10, **dadurch gekennzeichnet, dass** der Reinigungsschritt nach dem Inkontaktbringen der Bauteile mit dem Reinigungsmedium das Erzeugen eines Unterdrucks in der Reinigungskammer umfasst, durch welchen die Bauteile getrocknet werden.

12. Verfahren nach einem der Ansprüche 1 bis 11, **dadurch gekennzeichnet, dass** die Bauteile in der mit Reinigungsmedium gefüllten Reinigungskammer Ultraschall ausgesetzt werden.

13. Verfahren nach einem der Ansprüche 1 bis 12, **dadurch gekennzeichnet, dass** ein Reinigungsmedium eingesetzt wird, das einen Flammpunkt von ≥ 50°C aufweist.

14. Verfahren nach einem der Ansprüche 1 bis 13, **dadurch gekennzeichnet, dass** das an den Bauteilen anhaftende Harz bei 20°C eine Viskosität von > 2 Pa.s, vorzugsweise > 30 Pa.s, aufweist.

15. Verfahren nach einem der Ansprüche 1 bis 14, **dadurch gekennzeichnet, dass** zumindest ein weiterer Bearbeitungsschritt durchgeführt wird zur Entfernung von Stützstrukturen von den Bauteilen, zum Färben der Bauteile, zum chemischen Modifizieren von Bauteiloberflächen und/oder von Volumina der Bauteile und/oder zum Imprägnieren der Bauteile.

## Claims

1. Method for cleaning components to which unreacted resin adheres, particularly components manufactured by means of a lithographic additive manufacturing process, comprising:
a cleaning step in which the components are placed in a cleaning chamber, the components are contacted with a cleaning medium in the cleaning chamber, whereby resin is detached from the components, and the cleaning medium loaded with the detached resin is discharged from the cleaning chamber, and
a regeneration step in which the loaded cleaning medium is fed to a distillation unit, in which the contaminated cleaning medium is regenerated by distillative separation of the resin, **characterized in that**
at least one inhibitor is added to the cleaning medium, which delays or prevents polymerization of the resin during the cleaning step and/or the regeneration step, **characterized in that** the at least one inhibitor prevents thermally- and/or light-induced polymerization of the resin at a temperature of > 70°C, preferably > 100°C,
wherein the at least one inhibitor is phenothiazine or a phenothiazine derivative
or the at least one inhibitor is selected from the group consisting of sterically hindered phenols, phenol, tert-butylhydroquinone, 4-methoxyphenol, pyrogallol, nitrophenol, 4-tert-butylcatechol, 2,6-di-tert-butylphenol, 6-tert-butyl-2,4-xylenol, 2,6-di-tert-butyl-p-cresol, 2-tert-butylhydroquinone, 2-tert-butyl-1,4-benzoquinone, 1,3,5-tris(3,5-di-tert-butyl-4-hydroxybenzyl)-1,3,5-triazinane-2,4,6-trione, 2,2'-methylenebis(4-methyl-6-tert-butylphenol), 2,2,6,6-tetramethylpiperidinyloxyl and derivatives thereof, 4-hydroxy-2,2,6,6-tetramethylpiperidinyloxyl and derivatives thereof, 2,6-di-tert-butylphenol and a mixture of at least two of the aforementioned.

2. Method according to claim 1, **characterized in that** a mixture of an aerobic and an anaerobic inhibitor, such as a mixture of at least one hydroquinone derivative or phenol derivative with at least one phenothiazine or phenothiazine derivative, is used as inhibitor.

3. Method according to claim 1 or 2, **characterized in that** the at least one inhibitor is present in a concentration of 50 ppm to 20 vol.-%, preferably 500 ppm to 10 vol.-%, particularly 1,000 ppm to 5 vol.-%, of the cleaning medium.

4. Method according to claim 1, 2 or 3, **characterized in that** oxygen is introduced into the bottom of the distillation unit, preferably in the presence of an aerobic inhibitor.

5. Method according to any of claims 1 to 4, **characterized in that** the cleaning medium is continuously conducted in a fluid circuit, in which the cleaning medium is led away from a storage container or the cleaning chamber, passed through the distillation unit and returned to the cleaning chamber or the storage container.

6. Method according to any of claims 1 to 5, **characterized in that** the cleaning medium, particularly coming from the distillation unit, is introduced into the cleaning chamber in vapor form.

7. Method according to any of claims 1 to 6, **characterized in that** the components are placed in the cleaning chamber in the state arranged on a build platform.

8. Method according to any of claims 1 to 6, **characterized in that** the components are placed in the cleaning chamber in separated state.

9. Method according to any of claims 1 to 8, **characterized in that** the components are arranged in a fluid-permeable container, such as a cage, net or basket, particularly fastened in the fluid-permeable container, and subjected to the cleaning step in such manner.

10. Method according to claim 9, **characterized in that** the fluid-permeable container is rotated about at least one axis during the cleaning step.

11. Method according to any of claims 1 to 10, **characterized in that** the cleaning step comprises, after bringing the components into contact with the cleaning medium, generating a vacuum in the cleaning chamber, by which the components are dried.

12. Method according to any of claims 1 to 11, **characterized in that** the components are exposed to ultrasound in the cleaning chamber filled with cleaning medium.

13. Method according to any of claims 1 to 12, **characterized in that** a cleaning medium is used that has a flash point of ≥ 50°C.

14. Method according to any of claims 1 to 13, **characterized in that** the resin adhering to the components has a viscosity of > 2 Pa·s, preferably > 30 Pa·s, at 20°C.

15. Method according to any of claims 1 to 14, **characterized in that** at least one further processing step is performed for removing support structures from the components, for coloring the components, for chemically modifying component surfaces and/or volumes of the components and/or for impregnating the components.

## Revendications

1. Procédé de nettoyage de composants sur lesquels adhère de la résine non réagie, en particulier de composants fabriqués au moyen d'un procédé de fabrication générative lithographique, comprenant
une étape de nettoyage, dans laquelle les composants sont introduits dans une chambre de nettoyage, les composants sont mis en contact avec un milieu de nettoyage dans la chambre de nettoyage, par quoi la résine est détachée des composants, et le milieu de nettoyage chargé de résine détachée est évacué de la chambre de nettoyage, et
une étape de régénération, dans laquelle le milieu de nettoyage chargé est alimenté à une unité de distillation, dans laquelle le milieu de nettoyage contaminé est régénéré par séparation distillative de la résine, **caractérisé en ce que**
au moins un inhibiteur est ajouté au milieu de nettoyage, lequel retarde ou empêche une polymérisation de la résine pendant l'étape de nettoyage et/ou l'étape de régénération, **caractérisé en ce que** le au moins un inhibiteur empêche une polymérisation thermique et/ou photo-induite de la résine à une température de > 70°C, de préférence > 100°C,
le au moins un inhibiteur étant la phénothiazine ou un dérivé de phénothiazine
ou le au moins un inhibiteur est choisi dans le groupe constitué de phénols stériquement encombrés, phénol, tert-butylhydroquinone, 4-méthoxyphénol, pyrogallol, nitrophénol, 4-tert-butylcatéchol, 2,6-di-tert-butylphénol, 6-tert-butyl-2,4-xylénol, 2,6-di-tert-butyl-p-crésol, 2-tert-butylhydroquinone, 2-tert-butyl-1,4-benzoquinone, 1,3,5-tris(3,5-di-tert-butyl-4-hydroxybenzyl)-1,3,5-triazinane-2,4,6-trione, 2,2'-méthylènebis(4-méthyl-6-tert-butylphénol), 2,2,6,6-tétraméthylpipéridinyloxyle et ses dérivés, 4-hydroxy-2,2,6,6-tétraméthylpipéridinyloxyle et ses dérivés, 2,6-di-tert-butylphénol et un mélange d'au moins deux des composés mentionnés.

2. Procédé selon la revendication 1, **caractérisé en ce qu'**on utilise comme inhibiteur un mélange d'un inhibiteur aérobie et d'un inhibiteur anaérobie, comme par exemple un mélange d'au moins un dérivé d'hydroquinone ou dérivé de phénol avec au moins une phénothiazine ou dérivé de phénothiazine.

3. Procédé selon la revendication 1 ou 2, **caractérisé en ce que** le au moins un inhibiteur est présent dans une concentration de 50 ppm à 20 % en volume, de préférence 500 ppm à 10 % en volume, en particulier 1.000 ppm à 5 % en volume, du milieu de nettoyage.

4. Procédé selon la revendication 1, 2 ou 3, **caractérisé en ce que** l'oxygène est introduit dans le fond de l'unité de distillation, de préférence en présence d'un inhibiteur aérobie.

5. Procédé selon l'une des revendications 1 à 4, **caractérisé en ce que** le milieu de nettoyage est conduit en continu dans un circuit de fluide, dans lequel le milieu de nettoyage est évacué d'un réservoir de stockage ou de la chambre de nettoyage, conduit à travers l'unité de distillation et ramené vers la chambre de nettoyage ou le réservoir de stockage.

6. Procédé selon l'une des revendications 1 à 5, **caractérisé en ce que** le milieu de nettoyage, en particulier provenant de l'unité de distillation, est introduit sous forme vapeur dans la chambre de nettoyage.

7. Procédé selon l'une des revendications 1 à 6, **caractérisé en ce que** les composants sont introduits dans la chambre de nettoyage dans l'état arrangé sur une plateforme de construction.

8. Procédé selon l'une des revendications 1 à 6, **caractérisé en ce que** les composants sont introduits dans la chambre de nettoyage dans un état individualisé.

9. Procédé selon l'une des revendications 1 à 8, **caractérisé en ce que** les composants sont disposés dans un récipient perméable aux fluides, comme par exemple une cage, un filet ou un panier, en particulier sont fixés dans le récipient perméable aux fluides, et sont ainsi soumis à l'étape de nettoyage.

10. Procédé selon la revendication 9, **caractérisé en ce que** le récipient perméable aux fluides est tourné autour d'au moins un axe pendant l'étape de nettoyage.

11. Procédé selon l'une des revendications 1 à 10, **caractérisé en ce que** l'étape de nettoyage comprend, après la mise en contact des composants avec le milieu de nettoyage, la génération d'une dépression dans la chambre de nettoyage, par laquelle les composants sont séchés.

12. Procédé selon l'une des revendications 1 à 11, **caractérisé en ce que** les composants sont exposés aux ultrasons dans la chambre de nettoyage remplie de milieu de nettoyage.

13. Procédé selon l'une des revendications 1 à 12, **caractérisé en ce qu'**on utilise un milieu de nettoyage qui présente un point d'éclair de ≥ 50 °C.

14. Procédé selon l'une des revendications 1 à 13, **caractérisé en ce que** la résine adhérant aux composants présente à 20°C une viscosité de > 2 Pa.s, de préférence > 30 Pa.s.

15. Procédé selon l'une des revendications 1 à 14, **caractérisé en ce qu'**au moins une étape de traitement supplémentaire est effectuée pour l'enlèvement de structures de support des composants, pour la coloration des composants, pour la modification chimique de surfaces de composants et/ou de volumes des composants et/ou pour l'imprégnation des composants.
